# EUROPEAN PATENT SPECIFICATION

(11) **EP 2 055 107 B1**
(45) Date of publication and mention of the grant of the patent: **15.05.2013**
(21) Application number: 07826068.4
(22) Date of filing: 20.08.2007
(51) Int. Cl.: H04N 7/26, G11B 27/32, H04N 21/00, H04L 29/06

(54) **Hint of tracks relationships for multi-stream media files in multiple description coding MDC.**
Hinweise auf Spurenzusammenhänge von Multistream-Mediadateien mit Mehrfachbeschreibungskodierung.
Indication des relations de pistes pour streaming multi-flux de données multimédias.

(30) Priority: 24.08.2006 US 840209 P
(43) Date of publication of application: 06.05.2009
(73) Proprietor: Nokia Corporation, 02150 Espoo (FI)
(72) Inventor: WANG, Ye-Kui, 33710 Tampere (FI); HANNUKSELA, Miska, 36110 Ruutana (FI); BOUAZIZI, Imed, 33720 Tampere (FI)
(74) Representative: Papula Oy
(86) International application number: PCT/IB2007/053324
(87) International publication number: WO 2008/023328

(56) References cited:
- WO-A1-03/098475
- WO-A1-03/098475
- WO-A1-2004/056118
- WO-A1-2007/042916
- WO-A1-2007/042916
- WO-A2-2005/086625
- SINGER, D.;VISHARAM M.Z.: "ISO Base Media File Format White Paper", ITU STUDY GROUP 16 - ISO/IEC MPEG & ITU-T VCEG (ISO/IEC JTC1/SC29/WG11 AND ITU-T SG16 Q6), no. N8150, 8 April 2006 (2006-04-08), pages 1-4, XP030014642, montreux
- "INTERNATIONAL STANDARD ISO/IEC 14496-12 Information technology Coding of audio-visual objects Part 12: ISO base media file format", INTERNET CITATION, 1 January 2005 (2005-01-01), pages 1-84, XP007914375, Retrieved from the Internet: URL:http://www.iso.org/iso/iso_catalogue/c atalogue_ics/catalogue_detail_ics.htm?csnu mber=41828 [retrieved on 2010-08-11]

## Description

### FIELD OF THE INVENTION

The present invention relates generally to the storage of coded media files. More particularly, the present invention relates to the storage of coded media data in files for local playback or transmission.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Multimedia applications include services such as local playback, streaming or on-demand, conversational and broadcast/multicast services. Technologies involved in multimedia applications include, among others, media coding, storage and transmission. Different standards have been specified for different technologies.

Scalable coding produces scalable media streams, where a stream can be coded in multiple layers. In scalable coding, each layer, together with the required lower layers, is one representation of the media sequence at a certain spatial resolution, temporal resolution, certain quality level or some combination of the three. A portion of a scalable stream can be extracted and decoded at a desired spatial resolution, temporal resolution, certain quality level or some combination thereof. A scalable stream contains a non-scalable base layer and one or more enhancement layers. An enhancement layer may enhance the temporal resolution (i.e., the frame rate), the spatial resolution, or simply the quality of the video content represented by a lower layer or part thereof. In some cases, data in an enhancement layer can be truncated after a certain location, or even at arbitrary positions, where each truncation position may include additional data representing increasingly enhanced visual quality.

SVC is an example scalable coding of video. The latest draft of the SVC standard is described in JVT-S202, "Joint Scalable Video Model JSVM-6: Joint Draft 6 with proposed changes," 19th Meeting, Geneva, Switzerland, April 2006.

In multi-view video coding (MVC), video sequences output from different cameras, each corresponding to a view, are encoded into one bitsream. After decoding, to display a certain view, the decoded pictures belonging to that view are displayed. The latest draft of the MVC standard is described in JVT-T208, "Joint multiview video model (JMVM LO)," 20th JVT meeting, Klagenfurt, Austria, July 2006.

In multiple description coding (MDC), an input media sequence is encoded into more than sub-streams, each of which is referred to as a description. Each description is independently decodable and represents a certain media quality. However, based on the decoding of one or more than one description, the additional decoding of another description can result in an improved media quality. MDC is discussed in detail in Y. Wang, A. Reibman, and S. Lin, "Multiple description coding for video delivery," Proceedings of the IEEE, vol. 93, no. 1, Jan. 2005.

The file format is an important element in the chain of multimedia content production, manipulation, transmission and consumption. There is a difference between the coding format and the file format. The coding format relates to the action of a specific coding algorithm that codes the content information into a bitstream. In contrast, the file format comprises a system of organizing the generated bitstream in such way that it can be accessed for local decoding and playback, transferred as a file, or streamed, all utilizing a variety of storage and transport architectures. Further, the file format can facilitate the interchange and editing of the media. For example, many streaming applications require a pre-encoded bitstream on a server to be accompanied by metadata, stored in the "hint-tracks," that assists the server to stream the video to the client. Examples information that can be included in hint-track metadata include timing information, indications of synchronization points, and packetization hints. This information is used to reduce the operational load of the server and to maximize the end-user experience.

Available media file format standards include the ISO file format (ISO/IEC 14496-12), the MPEG-4 file format (ISO/IEC 14496-14), the AVC file format (ISO/IEC 14496-15) and the 3GPP file format (3GPP TS 26.244). There is also a project in MPEG for development of the SVC file format, which will become an amendment to AVC file format. In a parallel effort, MPEG is defining a hint track format for FLUTE (file delivery over unidirectional transport) sessions.

The ISO file format is the base for the derivation of all the other above-referenced file formats. All of these file formats, including the ISO file format, are referred to as the ISO family of file formats. According to the ISO family of file formats, each file, hierarchically structured, contains exactly one movie box which may contain one or more tracks, and each track resides in one track box. It is possible for more than one track to store information of a certain media type. A subset of these tracks may form an alternate track group, wherein each track is independently decodable and can be selected for playback or transmission, and wherein only track in an alternate should be selected for playback or transmission.

All tracks in an alternate group are candidates for media selection. However, it may not make sense to switch between some of those tracks during a session. For example, one may allow switching between video tracks at different bit rates and keep the frame size, but not allow switching between tracks of different frame sizes. In the same manner one may want to the enable selection (but not switching) between tracks of different video codecs or different audio languages. The distinction between tracks for selection and switching is addressed by introducing a sub-group structure referred to as switch groups. All tracks in an alternate group are candidates for media selection, whereas, tracks in a switch (sub)group are also available for switching during a session. Different switch groups represent different operation points, such as different frame size, high/low quality, etc.

The ISO file format supports hint tracks that provide cookbook instructions for encapsulating data to transmission packets and transmission of the formed packets according to certain timestamps. The hint track mechanism can be used by servers, such as streaming servers, for real-time audio-visual data. The cookbook instructions may contain guidance for packet header construction and include packet payload construction. In the packet payload construction, data residing in other tracks or items may be referenced, i.e. it is indicated by a reference which piece of data in a particular track or item is instructed to be copied into a packet during the packet construction process. The hint track mechanism is extensible to any transport protocols and, currently, the hint track format for Real-Time Transport Protocol (RTP, IETF RFC 3550 (www.ietf.org/rfc/rfc3550.txt)) is specified and the hint track format for file delivery protocols over uni-directional channels, such as FLUTE (IETF RFC 3926 (www.ietf.org/rfc/rfc3926.txt)) and ALC (IETF RFC 3450 (www.ietf.org/rfc/rfc3450.txt) is undergoing the standardization process.

As discussed above, the ISO family of file formats supports hint tracks. The draft SVC file format supports a data structure referred to as an extractor. An extractor is similar to a hint sample but is not specific to any transport protocol. An extractor references to a subset of the data of a media sample, where the referenced data corresponds to the data needed in that sample for the decoding and playback of a certain scalable layer.

For multicast applications with scalable media streams, information of a scalable stream may be stored in different tracks, with each track corresponding to a scalable layer or a number of contiguous layers. These tracks can be hint tracks as well as extractor tracks. As discussed herein, an "extractor track" refers to a track that contains extractors and possibly also non-extractor samples, e.g., media data units. This way, if layered multicast is applied, the sub-stream in each track can be sent in its own Real-time Transport Protocol (RTP) session, and a receiver subscribes to a number of the RTP sessions containing the desired scalable layer and the lower required layers. These tracks are referred to as a layered track group. Tracks in a layered track group together form an independently decodable scalable stream, while decoding of the sub-stream corresponding to each individual track in a layered track group may depend on sub-streams corresponding to other tracks. The above also applies to multi-view video streams, where each view is considered as a scalable layer. Similarly, for a MDC stream, information of each sub-stream or description may also be stored in its own track. These tracks corresponding to all of the descriptions of a MDC stream are referred to as a MDC track group.

FLUTE, which is discussed at IETF Request for Comments (RFC) No. 3926 (www.ietf.org/rfc/rfc3926.txt), has been widely adopted as the file delivery protocol for multicast and broadcast applications. FLUTE is based on the asynchronous layered coding (ALC) protocol, which is discussed in the IETF RFC 3450 (www.ietf.org/rfc/rfc3450.txt), and the layered coding transport (LCT) protocol, which is discussed in the IETF RFC 3451 (www.ietf.org/rfc/rfc3451.txt). FLUTE inherits all of the functionalities defined in the ALC and LCT protocols. LCT defines the notion of LCT channels to allow for massive scalability. The LCT scalability has been designed based on the Receiver-driven Layered Multicast (RLM) principle, where receivers are responsible of implementing an appropriate congestion control algorithm based on the adding and removing of layers of the delivered data. The sender sends the data into different layers, with each being addressed to a different multicast group.

In LCT, one or multiple channels may be used for the delivery of the files of a FLUTE session. A great flexibility is given to the FLUTE sender with regard to how the data is partitioned among the LCT channels. A common use case is to send the same data on all different LCT channels but at different bitrates. Additionally, the FLUTE sender may act intelligently to enable receivers to acquire all files of the FLUTE session by joining all channels for a shorter time than is normally required with one channel. In such a case, the data sent over each channel complements the data of other channels.

Information about the LCT channels of a FLUTE session, as well as how data is split between the different channels, is currently being defined in the FLUTE hint track specification. Such information will help the FLUTE server to select the right channels and merge them into the appropriate FLUTE session according to the target application. If a set of FLUTE hint tracks are independent from each other and only one of those hint tracks is intended to be processed during a FLUTE session, then they belong to an alternate track group, and at least a subset of them belong to one switching track group. If a set of FLUTE hint tracks are complementary to each other, they belong to a layered track group.

ISO/IEC Standard 14496-12 XP007914375 discloses the ISO base media file format and defines in paragraph "*RTP and SRTP Hint Track Format"* that in standard RTP, each media stream is sent as a separate RTP stream; multiplexing is achieved by using IP's port-level multiplexing, not by interleaving the data from multiple streams into a single RTP session. However, if MPEG is used, it may be necessary to multiplex several media tracks into one RTP track (e.g. when using MPEG-2 transport in RTP, or FlexMux). Each hint track is therefore tied to a set of media tracks by track references. The hint tracks extract data from their media tracks by indexing.
Reference publication W02007/042916 discloses a method of encoding a sequence of pictures into a sequence of access units. The method comprises encoding a first picture of the sequence of pictures into a first access unit of said sequence of access units, the first access unit comprising a first temporal level value for indicating temporal scalability of the first access unit, marking a decoded reference picture decodable from the first access unit as used for reference, encoding, after encoding the first picture, a second picture of the sequence of pictures into a second access unit of said sequence of access units, the second access unit comprising a second temporal level value for indicating temporal scalability of the second access unit, the first access unit and the second access unit being on the same spatial scalability layer and on the same quality scalability layer, and in response to the first temporal level value being the same or higher than the second temporal level value, marking the decoded reference picture as unused for reference.
Reference publication WO03/098475 discloses a method that comprises identifying parameter set metadata defining one or more parameter sets for a plurality of portions of multimedia data, and storing the parameter set metadata separately from the multimedia data, the separated parameter set metadata being subsequently transmitted to a decoding system for decoding the multimedia data. Each of the plurality of portions of multimedia data is a sample within the multimedia data.
Current file format designs do not support the signaling of layered or MDC track groups. In addition, the current signaling of alternate or switching track groups is to include an alternate or switching group ID in a track-level data structure (a track header box for alternate track groups and a track selection box in a track-level user data box). This entails the parsing of all of the tracks in a movie box in order to obtain the information of alternate or switching track groups. If the number of tracks is great, then the parsing complexity is non-trivial.

### SUMMARY OF THE INVENTION

According to an aspect of the invention, the invention relates to a method of transmitting coded multimedia content from a container file, comprising: parsing, in a sending device, a container file to find a track relationship box in the container file, the track relationship box identifying a layered group track relationship among a plurality of tracks, the track relationship box comprising information regarding the number of layered track groups in the container file, an identifier for each layered track group, the number of tracks included in each layered track group, an identifier for each track in each layered track group, for each track, an indication of the number of other tracks upon which the respective track directly or indirectly depends, and for each track, an identification of the other tracks upon which the respective track directly or indirectly depends; parsing the plurality of tracks from the container file in accordance with the parsed track relationship box, each track corresponding to a scalable layer; and transmitting the plurality of tracks. According to another aspect of the invention, the invention relates to a computer program product, embodied in a computer-readable medium, for transmitting coded multimedia content, comprising: computer code for parsing a container file to obtain a track relationship box in the container file, the track relationship box identifying a layered group track relationship among a plurality of tracks, the track relationship box comprising information regarding the number of layered track groups in the container file, an identifier for each layered track group, the number of tracks included in each layered track group, an identifier for each track in each layered track group, for each track, an indication of the number of other tracks upon which the respective track directly or indirectly depends, and for each track, an identification of the other tracks upon which the respective track directly or indirectly depends; computer code for parsing the plurality of tracks from the container file in accordance with the parsed track relationship box, each track corresponding to a scalable layer; and computer code for transmitting the plurality of tracks. According to another aspect of the invention, the invention relates to means for parsing a container file to obtain a track relationship box in the container file, the track relationship box identifying a layered group track relationship among a plurality of tracks, the track relationship box comprising information regarding the number of layered track groups in the container file, an identifier for each layered track group, the number of tracks included in each layered track group, an identifier for each track in each layered track group, for each track, an indication of the number of other tracks upon which the respective track directly or indirectly depends, and for each track, an identification of the other tracks upon which the respective track directly or indirectly depends; means for parsing the plurality of tracks from the container file in accordance with the parsed track relationship box, each track corresponding to a scalable layer; and means for transmitting the plurality of tracks.

These and other advantages and features of the invention, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

Figure 1 shows a generic multimedia communications system for use with various embodiments of the present invention;

Figure 2 is a perspective view of a mobile telephone that can be used in the implementation of the present invention; and

Figure 3 is a schematic representation of the telephone circuitry of the mobile telephone of Figure 2.

### DETAILED DESCRIPTION OF VARIOUS EMBODIMENTS

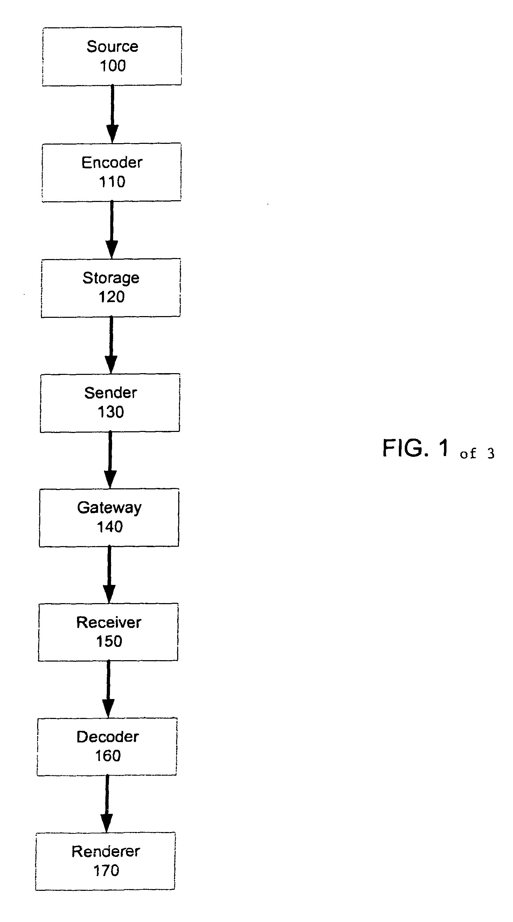

Figure 1 shows a generic multimedia communications system for use with the present invention. As shown in Figure 1, a data source 100 provides a source signal in an analog, uncompressed digital, or compressed digital format, or any combination of these formats. An encoder 110 encodes the source signal into a coded media bitstream. The encoder 110 may be capable of encoding more than one media type, such as audio and video, or more than one encoder 110 may be required to code different media types of the source signal. The encoder 110 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the following only one encoder 110 is considered to simplify the description without a lack of generality.

The coded media bitstream is transferred to a storage 120. The storage 120 may comprise any type of mass memory to store the coded media bitstream. The format of the coded media bitstream in the storage 120 may be an elementary self-contained bitstream format, or one or more coded media bitstreams may be encapsulated into a container file. Some systems operate "live", i.e. omit storage and transfer coded media bitstream from the encoder 110 directly to the sender 130. The coded media bitstream is then transferred to the sender 130, also referred to as the server, on a need basis. The format used in the transmission may be an elementary self-contained bitstream format, a packet stream format, or one or more coded media bitstreams may be encapsulated into a container file. The encoder 110, the storage 120, and the sender 130 may reside in the same physical device or they may be included in separate devices. The encoder 110 and sender 130 may operate with live real-time content, in which case the coded media bitstream is typically not stored permanently, but rather buffered for small periods of time in the content encoder 110 and/or in the sender 130 to smooth out variations in processing delay, transfer delay, and coded media bit rate.

The sender 130 sends the coded media bitstream using a communication protocol stack. The stack may include but is not limited to Real-Time Transport Protocol (RTP), User Datagram Protocol (UDP), and Internet Protocol (IP). When the communication protocol stack is packet-oriented, the sender 130 encapsulates the coded media bitstream into packets. For example, when RTP is used, the sender 130 encapsulates the coded media bitstream into RTP packets according to an RTP payload format. Typically, each media type has a dedicated RTP payload format. It should be again noted that a system may contain more than one sender 130, but for the sake of simplicity, the following description only considers one sender 130.

The sender 130 may or may not be connected to a gateway 140 through a communication network. The gateway 140 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. Examples of gateways 140 include multipoint conference control units (MCUs), gateways between circuit-switched and packet-switched video telephony, Push-to-talk over Cellular (PoC) servers, IP encapsulators in digital video broadcasting-handheld (DVB-H) systems, or set-top boxes that forward broadcast transmissions locally to home wireless networks. When RTP is used, the gateway 140 is called an RTP mixer and acts as an endpoint of an RTP connection.

The system includes one or more receivers 150, typically capable of receiving, de-modulating, and de-capsulating the transmitted signal into a coded media bitstream. The codec media bitstream is typically processed further by a decoder 160, whose output is one or more uncompressed media streams. Finally, a renderer 170 may reproduce the uncompressed media streams with a loudspeaker or a display, for example. The receiver 150, decoder 160, and renderer 170 may reside in the same physical device or they may be included in separate devices. It should therefore be understood that a bitstream to be decoded can be received from a remote device located within virtually any type of network, as well as from other local hardware or software within the device at issue. It should be also understood that, although text and examples contained herein may specifically describe an encoding process, one skilled in the art would readily understand that the same concepts and principles also apply to the corresponding decoding process and vice versa.

The present invention provides a system and method for signaling and indicating track relationship information in media files. In particular, the present invention provides a mechanism for signaling the information of layered track groups and the information of MDC track groups, as well as a mechanism for signaling track relationship information in an efficient way.

With the present invention, the selection of tracks for local playback or transmission in multimedia applications become simpler relative to conventional arrangements. In local playback or unicast streaming applications, to select an independently decodable track for a certain media type, the information of alternate track groups is first found via the track relation box, and one track is selected from an alternate track group for the media type. If stream switching is desired, the switching track group information can be easily found via the track relation box. In multicast applications with scalable or MDC streams, the tracks in a layered or MDC group can be easily found via the track relation box and selected among all of the layered or MDC groups.

In one embodiment of the present invention, a new box, referred to herein as a track relation box, is defined and specifies the relationship between tracks. The track relation box is defined as follows:

| | |
|---|---|
| Box Type: | 'trel' |
| Container: | Movie Box ('moov') |
| Mandatory: | No |
| Quantity: | Zero or One |

The syntax for the track relation box is as follows: aligned(8) class TrackRelationBox

```
      extends FullBox('trel', version = 0, flags) {
      int i,j,k;
      if(flags & 0x000001 == 1) {
             unsigned int(16) num_alternate_groups;
             for(i=0; i<num_alternatve_groups; i++) {
                    int(16) alternate_group_id;
                    unsigned int(16) num_tracks_in_alternate_group;
                    for(j=0; j<num_tracks_in_alternate_group; j++)
                            unsigned int(32) alternate_track_id;
             }
      }
      if(flags & 0x000002 == 1) {
             unsigned int(16) num_switch_groups;
             for(i=0; i<num_switch_groups; i++) {
                    int(16) switch_group_id;
                    unsigned int(16) num_tracks_in_switch_group;
                    for(j=0; j<num tracks in switch_group; j++)
                           unsigned int(32) switch_track_id;
             }
      }
     if(flags & 0x000004 = 1) {
             unsigned int(16) num_layered_groups;
             for(i=0; 1<num-layered-gro ups; i++) {
                     int(16) layered_group_id;
                     unsigned int(16) num_tracks_in_layered_group;
                     for(j=0; j<num_tracks_in_layered_group; j++) {
                            unsigned int(32) layered_track_id;
                            unsigned int(16) num_dependent_on_tracks;
                            for(k=0; k<num_layered_on_tracks; k++)
                                   unsigned int(32) dependent_on_track_id;
                     }
              }
      }
      if(flags & 0x000008 ==1) {
             unsigned int(16) num_mdc_groups;
             for(i=0; i<num_mdc_groups; i++) {
                     int(16) mdc_group_id;
                     unsigned int(16) num_tracks_in_mdc_group;
                     for(j=0; j<num_tracks_in_mdc_group; j++)
                            unsigned int(32) mdc_track_id;
             }
      }
  } 
```

In the above syntax, "version" is an integer that specifies the version of the track relation box (0 as described above).

"flags" is a 24-bit integer with flags. The following bits are defined, where bit 0 is the least significant bit, bit 1 is the second least significant bit, etc. When bit 0 is equal to 1, this indicates that information of alternate track groups is present in this box. When bit 0 is equal to 0, this indicates that information of alternate track groups is not present in this box.

When bit 1 is equal to 1, this indicates that information of switching track groups is present in this box. When bit 1 is equal to 0, this indicates that information of switching track groups is not present in this box.

When bit 2 is equal to 1, this indicates that information of layered track groups is present in this box. When bit 2 is equal to 0, this indicates that information of layered track groups is not present in this box.

When bit 3 is equal to 1, this indicates that information of MDC track groups is present in this box. When bit 3 is equal to 0, this indicates that information of MDC track groups is not present in this box.

"num_alternate_groups" indicates the number of alternate track groups that are signaled. "alternate_group_id" indicates the identifier of the i-th alternate track group that is signaled. The value is not equal to 0. Any track associated with an alternate_group_id has an alternate_group (in the track header box) equal to the alternate_group_id. Any track having an alternate_group (in the track header box) not equal to 0 is associated with an alternative_group_id. "num_tracks_in_alternate_group" indicates the number of tracks in the i-th alternate track group that is signaled. The "alternate_track_id" indicates the track ID of the j-th track in the i-th alternate track group that is signaled.

"num_switch_groups" indicates the number of switching track groups that are signaled. "switch_group_id" indicates the identifier of the i-th switching track group that is signaled. The value is not equal to 0. For any track associated with a switch_group_id, if a track selection box is present, then the switch_group signaled in the track selection box is equal to the switch_group_id. For any track having a track selection box present, if the alternate_group is not equal to 0, the track shall be associated with a switch_group_id. "num_tracks_in_switch_group" indicates the number of tracks in the i-th switch track group that is signaled. "switch_track_id" indicates the track ID of the j-th track in the i-th switch track group that is signaled.

"num_layered_groups" indicates the number of layered track groups that are signaled. "layered_group_id" indicates the identifier of the i-th layered track group that is signaled.

"num_tracks_in_layered_group" indicates the number of tracks in the i-th layered track group that is signaled. "layered_track_id" indicates the track ID of the j-th track in the i-th layered track group that is signaled.

"num_dependent_on_tracks" indicates the number of tracks on which the j-th track in the i-th layered track group is directly or indirectly dependent. "dependent_on_track_id" indicates the track ID of the k-th track on which the j-th track in the i-th layered track group is directly or indirectly dependent.

"num_mdc_groups" indicates the number of MDC track groups that are signaled. "mdc_group_id" indicates the identifier of the i-th MDC track group that is signaled.

"num_tracks_in_mdc_group" indicates the number of tracks in the i-th MDC track group that is signaled. "mdc_track_id" indicates the track ID of the j-th track in the i-th MDC track group that is signaled.

In addition to the above, track relationship information can be presented according to various other embodiments of the present invention. For example, it is possible to signal the information of layered or MDC track groups in the track level. For layered track groups, a layered group ID is signaled in the track header box, in the track-level user data box, or in any other track-level data structure. The situation is similar for MDC track groups. In another embodiment, the track relation box can also be contained in the movie header box or in a movie-level user data box. In still another embodiment, information of different types of track groups can be signaled in separate boxes. Other embodiments in addition to those described herein are also possible.

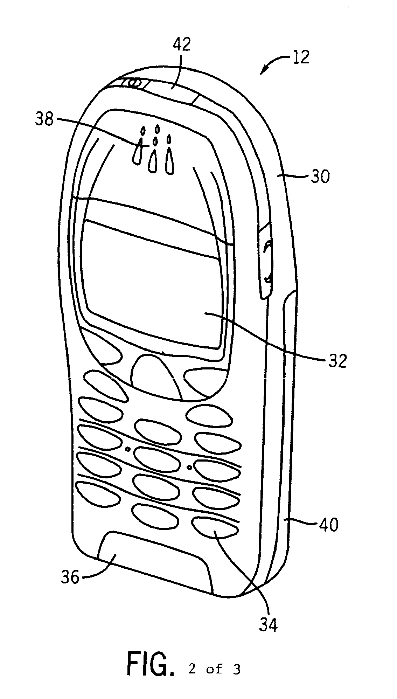

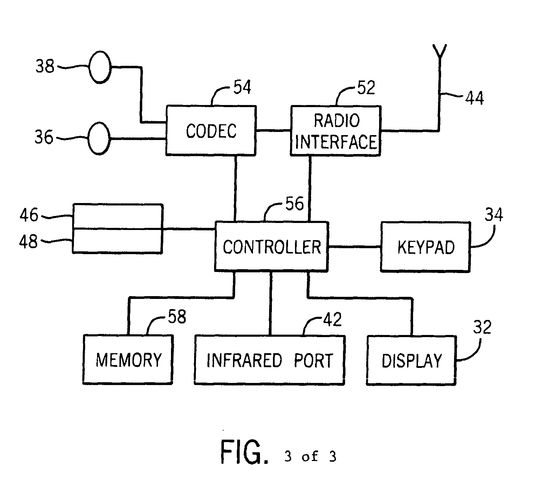

Figures 2 and 3 show one representative electronic device 12 within which the present invention may be implemented. It should be understood, however, that the present invention is not intended to be limited to one particular type of electronic device 12. The electronic device 12 of Figures 2 and 3 includes a housing 30, a display 32 in the form of a liquid crystal display, a keypad 34, a microphone 36, an ear-piece 38, a battery 40, an infrared port 42, an antenna 44, a smart card 46 in the form of a UICC according to one embodiment of the invention, a card reader 48, radio interface circuitry 52, codec circuitry 54, a controller 56 and a memory 58. Individual circuits and elements are all of a type well known in the art, for example in the Nokia range of mobile telephones.

Communication devices implementing the present invention may communicate using various transmission technologies including, but not limited to, Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc. A communication device may communicate using various media including, but not limited to, radio, infrared, laser, cable connection, and the like.

The present invention is described in the general context of method steps, which may be implemented in one embodiment by a program product including computer-executable instructions, such as program code, executed by computers in networked environments. Generally, program modules include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps.

Software and web implementations of the present invention could be accomplished with standard programming techniques with rule based logic and other logic to accomplish the various database searching steps, correlation steps, comparison steps and decision steps. It should also be noted that the words "component" and "module," as used herein and in the claims, is intended to encompass implementations using one or more lines of software code, and/or hardware implementations, and/or equipment for receiving manual inputs.

The foregoing description of embodiments of the present invention have been presented for purposes of illustration and description. The embodiments were chosen and described in order to explain the principles of the present invention and its practical application to enable one skilled in the art to utilize the present invention in various embodiments and with various modifications as are suited to the particular use contemplated. acquired from practice of the present invention. The embodiments were chosen and described in order to explain the principles of the present invention and its practical application to enable one skilled in the art to utilize the present invention in various embodiments and with various modifications as are suited to the particular use contemplated.

## Claims

1. A method of transmitting coded multimedia content from a container file, comprising:
parsing (130), in a sending device (100,130), a container file (120) to find a track relationship box in the container file, the track relationship box identifying a layered group track relationship among a plurality of tracks, the track relationship box comprising information regarding the number of layered track groups in the container file, an identifier for each layered track group, the number of tracks included in each layered track group, an identifier for each track in each layered track group, for each track, an indication of the number of other tracks upon which the respective track directly or indirectly depends, and for each track, an identification of the other tracks upon which the respective track directly or indirectly depends;
parsing the plurality of tracks from the container file in accordance with the parsed track relationship box, each track corresponding to a scalable layer; and
transmitting the plurality of tracks.

2. The method of claim 1, wherein the track relationship box further comprises information regarding:
the number of alternate track groups in the container file,
an identifier for each alternate track group,
the number of tracks included in each alternate track group, and
an identifier for each track in each alternate track group.

3. The method of claim 1, wherein the track relationship box further comprises information regarding:
the number of switching track groups in the container file,
an identifier for each switching track group,
the number of tracks included in each switching track group, and
an identifiers for each track in each switching track group.

4. A computer program product, embodied in a computer-readable medium, for transmitting coded multimedia content, comprising:
computer code for parsing (130) a container file (120) to obtain a track relationship box in the container file, the track relationship box identifying a layered group track relationship among a plurality of tracks, the track relationship box comprising information regarding the number of layered track groups in the container file, an identifier for each layered track group, the number of tracks included in each layered track group, an identifier for each track in each layered track group, for each track, an indication of the number of other tracks upon which the respective track directly or indirectly depends, and for each track, an identification of the other tracks upon which the respective track directly or indirectly depends;
computer code for parsing (130) the plurality of tracks from the container file in accordance with the parsed track relationship box, each track corresponding to a scalable layer; and
computer code for transmitting the plurality of tracks.

5. An apparatus (12), comprising:
means for parsing (130) a container file (120) to obtain a track relationship box in the container file, the track relationship box identifying a layered group track relationship among a plurality of tracks, the track relationship box comprising information regarding the number of layered track groups in the container file, an identifier for each layered track group, the number of tracks included in each layered track group, an identifier for each track in each layered track group, for each track, an indication of the number of other tracks upon which the respective track directly or indirectly depends, and for each track, an identification of the other tracks upon which the respective track directly or indirectly depends;
means for parsing (130) the plurality of tracks from the container file in accordance with the parsed track relationship box, each track corresponding to a scalable layer; and
means for transmitting the plurality of tracks.

6. The apparatus of claim 5, wherein the track relationship box further comprises information regarding:
the number of alternate track groups in the container file,
an identifier for each alternate track group,
the number of tracks included in each alternate track group, and
an identifier for each track in each alternate track group.

7. The apparatus of claim 5, wherein the track relationship box further comprises information regarding:
the number of switching track groups in the container file,
an identifier for each switching track group,
the number of tracks included in each switching track group, and
an identifiers for each track in each switching track group.

## Patentansprüche

1. Verfahren zum Übertragen von codiertem Multimediainhalt aus einer Containerdatei, Folgendes umfassend:
Parsen (130), in einer Sendevorrichtung (100, 130), einer Containerdatei (120), um in der Containerdatei eine Track-Beziehungsbox aufzufinden, wobei die Track-Beziehungsbox unter mehreren Tracks eine Track-Beziehung für in Schichten aufgebaute Gruppen festlegt und wobei die Track-Beziehungsbox Folgendes umfasst: Information, die die Zahl in Schichten aufgebauter Track-Gruppen in der Containerdatei betrifft, eine Kennung für jede in Schichten aufgebaute Track-Gruppe, die Zahl Tracks, die in jeder in Schichten aufgebauten Track-Gruppe enthalten ist, eine Kennung für jeden Track in jeder in Schichten aufgebauten Track-Gruppe, für jeden Track eine Angabe der Zahl weiterer Tracks, von denen der jeweilige Track direkt oder indirekt abhängt, und für jeden Track eine Kennung für die weiteren Tracks, von denen der jeweilige Track direkt oder indirekt abhängt;
Parsen der mehreren Tracks aus der Containerdatei gemäß der geparsten Track-Beziehungsbox, wobei jeder Track einer skalierbaren Schicht entspricht; und
Übertragen der mehreren Tracks.

2. Verfahren nach Anspruch 1, wobei die Track-Beziehungsbox außerdem Information umfasst, die Folgendes betrifft:
die Zahl alternativer Track-Gruppen in der Containerdatei,
eine Kennung für jede alternative Track-Gruppe,
die Zahl Tracks, die in jeder alternativen Track-Gruppe enthalten sind, und
eine Kennung für jeden Track in jeder alternativen Track-Gruppe.

3. Verfahren nach Anspruch 1, wobei die Track-Beziehungsbox außerdem Information umfasst, die Folgendes betrifft:
die Zahl Umschalt-Track-Gruppen in der Containerdatei,
eine Kennung für jede Umschalt-Track-Gruppe,
die Zahl Tracks, die in jeder Umschalt-Track-Gruppe enthalten sind, und
eine Kennung für jeden Track in jeder Umschalt-Track-Gruppe.

4. Computerprogrammprodukt, das auf einem computerlesbaren Medium ausgeführt ist, zum Übertragen von codiertem Multimediainhalt, Folgendes umfassend:
Computercode zum Parsen (130) einer Containerdatei (120), um in der Containerdatei eine Track-Beziehungsbox zu erhalten, wobei die Track-Beziehungsbox unter mehreren Tracks eine Track-Beziehung für in Schichten aufgebaute Gruppen festlegt und wobei die Track-Beziehungsbox Folgendes umfasst: Information, die die Zahl in Schichten aufgebauter Track-Gruppen in der Containerdatei betrifft, eine Kennung für jede in Schichten aufgebaute Track-Gruppe, die Zahl Tracks, die in jeder in Schichten aufgebauten Track-Gruppe enthalten ist, eine Kennung für jeden Track in jeder in Schichten aufgebauten Track-Gruppe, für jeden Track eine Angabe der Zahl weiterer Tracks, von denen der jeweilige Track direkt oder indirekt abhängt, und für jeden Track eine Kennung für die weiteren Tracks, von denen der jeweilige Track direkt oder indirekt abhängt;
Computercode zum Parsen (130) der mehreren Tracks aus der Containerdatei gemäß der geparsten Track-Beziehungsbox, wobei jeder Track einer skalierbaren Schicht entspricht; und
Computercode zum Übertragen der mehreren Tracks.

5. Vorrichtung (12), Folgendes umfassend:
ein Mittel zum Parsen (130) einer Containerdatei (120), um in der Containerdatei eine Track-Beziehungsbox zu erhalten, wobei die Track-Beziehungsbox unter mehreren Tracks eine Track-Beziehung für in Schichten aufgebaute Gruppen festlegt und wobei die Track-Beziehungsbox Folgendes umfasst: Information, die die Zahl in Schichten aufgebauter Track-Gruppen in der Containerdatei betrifft, eine Kennung für jede in Schichten aufgebaute Track-Gruppe, die Zahl Tracks, die in jeder in Schichten aufgebauten Track-Gruppe enthalten ist, eine Kennung für jeden Track in jeder in Schichten aufgebauten Track-Gruppe, für jeden Track eine Angabe der Zahl weiterer Tracks, von denen der jeweilige Track direkt oder indirekt abhängt, und für jeden Track eine Kennung für die weiteren Tracks, von denen der jeweilige Track direkt oder indirekt abhängt;
ein Mittel zum Parsen (130) der mehreren Tracks aus der Containerdatei gemäß der geparsten Track-Beziehungsbox, wobei jeder Track einer skalierbaren Schicht entspricht; und
ein Mittel zum Übertragen der mehreren Tracks.

6. Vorrichtung nach Anspruch 5, wobei die Track-Beziehungsbox außerdem Information umfasst, die Folgendes betrifft:
die Zahl alternativer Track-Gruppen in der Containerdatei,
eine Kennung für jede alternative Track-Gruppe,
die Zahl Tracks, die in jeder alternativen Track-Gruppe enthalten sind, und
eine Kennung für jeden Track in jeder alternativen Track-Gruppe.

7. Vorrichtung nach Anspruch 5, wobei die Track-Beziehungsbox außerdem Information umfasst, die Folgendes betrifft:
die Zahl Umschalt-Track-Gruppen in der Containerdatei,
eine Kennung für jede Umschalt-Track-Gruppe,
die Zahl Tracks, die in jeder Umschalt-Track-Gruppe enthalten sind, und
eine Kennung für jeden Track in jeder Umschalt-Track-Gruppe.

## Revendications

1. Procédé de transmission de contenu multimédia codé en provenance d'un fichier conteneur, comprenant les étapes suivantes consistant à :
analyser (130), dans un dispositif émetteur (100 130), un fichier conteneur (120) pour trouver une boîte de relation de piste dans le fichier conteneur, la boîte de relation de piste identifiant une relation de piste de groupe en couches parmi une pluralité de pistes, la boîte de relation de piste comprenant des informations concernant le nombre de groupes de pistes en couches dans le fichier conteneur, un identifiant pour chaque groupe de pistes en couches, le nombre de pistes incluses dans chaque groupe de pistes en couches, un identifiant pour chaque piste dans chaque groupe de pistes en couches, pour chaque piste, une indication du nombre d'autres pistes dont la piste respective dépend directement ou indirectement, et pour chaque piste, une identification des autres pistes dont la piste respective dépend directement ou indirectement ;
analyser la pluralité de pistes en provenance du fichier conteneur conformément à la boîte de relation de piste analysée, chaque piste correspondant à une couche hiérarchisable ; et
transmettre la pluralité de pistes.

2. Procédé selon la revendication 1, dans lequel la boîte de relation de piste comprend en outre des informations concernant :
le nombre de groupes de pistes alternatifs dans le fichier conteneur,
un identifiant pour chaque groupe de pistes alternatif,
le nombre de pistes incluses dans chaque groupe de pistes alternatif, et
un identifiant pour chaque piste dans chaque groupe de pistes alternatif.

3. Procédé selon la revendication 1, dans lequel la boîte de relation de piste comprend en outre des informations concernant :
le nombre de groupes de pistes de commutation dans le fichier conteneur,
un identifiant pour chaque groupe de pistes de commutation,
le nombre de pistes incluses dans chaque groupe de pistes de commutation, et
un identifiant pour chaque piste dans chaque groupe de pistes de commutation.

4. Produit de programme informatique, intégré dans un support lisible par ordinateur, pour transmettre un contenu multimédia codé, comprenant :
un code informatique pour analyser (130) un fichier conteneur (120) pour obtenir une boîte de relation de piste dans le fichier conteneur, la boîte de relation de piste identifiant une relation de piste de groupe en couches parmi une pluralité de pistes, la boîte de relation de piste comprenant des informations concernant le nombre de groupes de pistes en couches dans le fichier conteneur, un identifiant pour chaque groupe de pistes en couches, le nombre de pistes incluses dans chaque groupe de pistes en couches, un identifiant pour chaque piste dans chaque groupe de pistes en couches, pour chaque piste, une indication du nombre d'autres pistes dont la piste respective dépend directement ou indirectement, et pour chaque piste, une identification des autres pistes dont la piste respective dépend directement ou indirectement ;
un code informatique pour analyser (130) la pluralité de pistes en provenance du fichier conteneur conformément à la boîte de relation de piste analysée, chaque piste correspondant à une couche hiérarchisable ; et
un code informatique pour transmettre la pluralité de pistes.

5. Appareil (12), comprenant :
des moyens pour analyser (130) un fichier conteneur (120) pour obtenir une boîte de relation de piste dans le fichier conteneur, la boîte de relation de piste identifiant une relation de piste de groupe en couches parmi une pluralité de pistes, la boîte de relation de piste comprenant des informations concernant le nombre de groupes de pistes en couches dans le fichier conteneur, un identifiant pour chaque groupe de pistes en couches, le nombre de pistes incluses dans chaque groupe de pistes en couches, un identifiant pour chaque piste dans chaque groupe de pistes en couches, pour chaque piste, une indication du nombre d'autres pistes dont la piste respective dépend directement ou indirectement, et pour chaque piste, une identification des autres pistes dont la piste respective dépend directement ou indirectement ;
des moyens pour analyser (130) la pluralité de pistes en provenance du fichier conteneur conformément à la boîte de relation de piste analysée, chaque piste correspondant à une couche hiérarchisable ; et
des moyens pour transmettre la pluralité de pistes.

6. Appareil selon la revendication 5, dans lequel la boîte de relation de piste comprend en outre des informations concernant :
le nombre de groupes de pistes alternatifs dans le fichier conteneur,
un identifiant pour chaque groupe de pistes alternatif,
le nombre de pistes incluses dans chaque groupe de pistes alternatif, et
un identifiant pour chaque piste dans chaque groupe de pistes alternatif.

7. Appareil selon la revendication 5, dans lequel la boîte de relation de piste comprend en outre des informations concernant :
le nombre de groupes de pistes de commutation dans le fichier conteneur,
un identifiant pour chaque groupe de pistes de commutation,
le nombre de pistes incluses dans chaque groupe de pistes de commutation, et
un identifiant pour chaque piste dans chaque groupe de pistes de commutation.
